(19)

Europäisches
Patentamt

European
Patent Office

Office européen
des brevets

(11) **EP 4 729 597 A1**

(12) **EUROPEAN PATENT APPLICATION**
published in accordance with Art. 153(4) EPC

(43) Date of publication:
**22.04.2026  Bulletin 2026/17**

(21) Application number: 24823293.6

(22) Date of filing: **05.06.2024**

(51) International Patent Classification (IPC):
*C12C 12/04* (2006.01)    *C12C 5/02* (2006.01)
*C12G 3/04* (2019.01)    *C12G 3/06* (2006.01)

(52) Cooperative Patent Classification (CPC):
**C12C 5/02; C12C 12/04; C12G 3/04; C12G 3/06;**
**C12H 3/00**

(86) International application number:
**PCT/JP2024/020592**

(87) International publication number:
**WO 2024/257675 (19.12.2024 Gazette 2024/51)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **14.06.2023   JP 2023097685**

(71) Applicants:
• **Asahi Group Holdings, Ltd.**
  **Tokyo 130-8602 (JP)**
• **Asahi Breweries, Ltd.**
  **Tokyo 130-8602 (JP)**

(72) Inventor: **KANAZAWA, Takenori**
  **Moriya-shi, Ibaraki 302-0106 (JP)**

(74) Representative: **Müller-Boré & Partner**
  **Patentanwälte PartG mbB**
  **Friedenheimer Brücke 21**
  **80639 München (DE)**

(54) **LOW-ALCOHOL BEER-LIKE BEVERAGE AND METHOD FOR PRODUCING LOW-ALCOHOL BEER-LIKE BEVERAGE**

(57)    The present invention addresses the problem of providing a low-alcohol beer-like beverage that maintains a good flavor for a long period. Provided as a solution to the problem is a low-alcohol beer-like beverage containing a fermented wort liquid, containing a highly hydrophobic aroma component that has a LogP of 3.0-4.3 at a concentration 150-400 ppb, and having an alcohol concentration of not more than 4 v/v%, wherein: the highly hydrophobic aroma component contains a terpene-based compound and an ester-based compound; the terpene-based compound contains at least one substance selected from the group consisting of linalool and myrcene; the ester-based compound contains ethyl octanoate; and the ratio of the terpene-based compound to the ester-based compound is 0.04-0.2.

EP 4 729 597 A1

**Description**

TECHNICAL FIELD

The present invention relates to a low-alcohol beer-like beverage, and particularly to a low-alcohol beer-like beverage having an alcohol concentration of 4 v/v% or less.

BACKGROUND ART

A low-alcohol beer-like beverage has attracted attention because it is less likely to cause a person to be deeply drunk and has a lighter effect on health. The low-alcohol beer-like beverage as used herein refers to a beer-like beverage containing from about 2 to 4 v/v% of alcohol.

Beer refers to a beverage obtained by using malt, hops and water as raw materials and fermenting the resulted mixture with yeast. A beer-like beverage refers to a beverage designed to have a taste and a scent similar to those of beer. The beer-like beverage may be fermented or unfermented. Low-malt beer and a beverage obtained by mixing a malt-derived saccharified liquid (or sugar solution), hops, flavorings, a carbon dioxide gas, and so on. are included in the beer-like beverage.

Patent Document 1 describes that in a low-alcohol fermented malt beverage in which fermentation has been restricted by increasing a proportion of non-fermentability of wort, an organic acid is added so as to have a pH of from 3.5 to 4.4, thereby realizing a balanced taste and savor that are not inferior to those of regular beers.

Patent Document 2 describes that a malt beverage such as beer has a problem of being oxidized with a lapse of time after production to generate an unpleasant scent and taste called an oxidative degradation odor, an aged odor or an aged taste, and as a means for solving the problem, a sulfur-containing compound such as 3-methyl-2-butene-1-thiol is contained to reduce a sense of such an unpleasant flavor.

Patent Document 3 describes that a degree of jetted amount of a container-filled carbonated beverage at the opening of its container is reduced by lowering a proportion of the aroma components of high hydrophobicity such as a LogP of 3 or more among aroma components of the carbonated beverage.

PRIOR ART DOCUMENT

PATENT DOCUMENTS

Patent Document 1: Japanese Patent Laid-open Publication No. 2012-239460
Patent Document 2: Japanese Patent Laid-open Publication No. 2018-174756
Patent Document 3: Japanese Patent Laid-open Publication No. 2022-66506

SUMMARY OF THE INVENTION

PROBLEMS TO BE SOLVED BY THE INVENTION

In the low-alcohol beer-like beverage, a concentration of each flavor component is also adjusted to be low in order to balance with weakened burn and flavor of the lowered alcohol. That is, in the low-alcohol beer-like beverage, an action of an individual aroma component and taste component on a sensory function and an interaction of these components are weak. As a result, even if lipids are slightly oxidized and degraded, an oxidized odor and an aged taste are felt, and there is a problem that a duration of a good flavor is short.

The present invention is for solving the problem, and an object of the present invention is to provide a low-alcohol beer-like beverage having a long duration of a good flavor.

SOLUTIONS TO THE PROBLEMS

The present invention provides the following embodiments.

[Embodiment 1] A low-alcohol beer-like beverage comprising a fermented wort liquid, the low-alcohol beer-like beverage comprising a highly hydrophobic aroma component having a LogP of from 3.0 to 4.3, preferably from 3.0 to 3.8, at a concentration of from 150 to 400 ppb, preferably from 150 to 350 ppb, more preferably from 150 to 300 ppb, still more preferably from 150 to 250 ppb, even more preferably from 180 to 250 ppb, particularly preferably from 200 to 250 ppb, particularly more preferably from 213 to 241 ppb or from 210 to 230 ppb and particularly still more preferably from 213 to 222 ppb, and the low-alcohol beer-like beverage having an alcohol concentration of 4 v/v% or less, preferably from 1 to 4 v/v%, more preferably from 2 to 4 v/v% and still more preferably from 3.0 to 4.0 v/v%, wherein

the highly hydrophobic aroma component comprises a terpene-based compound and an ester-based compound, the terpene-based compound comprises at least one selected from the group consisting of linalool and myrcene, the ester-based compound comprises ethyl octanoate, and a ratio of the terpene-based compound to the ester-based compound is from 0.04 to 0.2, preferably from more than 0.04 to 0.1 or less, preferably from 0.042 to 0.088 and more preferably from 0.043 to 0.08.

[Embodiment 2] The low-alcohol beer-like beverage according to Embodiment 1, wherein a ratio of the linalool to the ethyl octanoate is from more than 0.012 to 0.15 or less, preferably from 0.015 to 0.06, more preferably from 0.020 to 0.05 and still more preferably from 0.025 to 0.05.

[Embodiment 3] The low-alcohol beer-like beverage according to Embodiment 1 or 2, wherein a ratio of the myrcene to the ethyl octanoate is from more than 0.03 to 0.06 or less, or from more than 0.027 to 0.077 or less, preferably from 0.03 to 0.06, more preferably from 0.031 to 0.05 and still more preferably from 0.031 to 0.042.

[Embodiment 4] The low-alcohol beer-like beverage according to any one of Embodiments 1 to 3, having invertase activity.

[Embodiment 5] The low-alcohol beer-like beverage according to any one of Embodiments 1 to 4, having a malt use ratio of 50% or more, preferably from 50 to 100%.

[Embodiment 6] The low-alcohol beer-like beverage according to any one of Embodiments 1 to 5, having an available carbohydrate concentration of from 0.5 to 1.5 g/100 ml, preferably from 0.6 to 1.4 g/100 ml and more preferably from 0.7 to 1.2 g/100 ml.

[Embodiment 7] The low-alcohol beer-like beverage according to any one of Embodiments 1 to 6, having a pH of 4.4 or less, preferably from 3.7 to 4.2 and more preferably from 3.9 to 4.2.

[Embodiment 8] The low-alcohol beer-like beverage according to any one of Embodiments 1 to 7, wherein the fermented wort liquid has an apparent attenuation limit of from 90 to 110%.

[Embodiment 9] The low-alcohol beer-like beverage according to any one of Embodiments 1 to 8, comprising a fermented wort liquid diluted with water.

[Embodiment 10] A method for producing a low-alcohol beer-like beverage, the method comprising:

containing a fermented wort liquid;
containing a highly hydrophobic aroma component having a LogP of from 3.0 to 4.3, preferably from 3.0 to 3.8, at a concentration of from 150 to 400 ppb, preferably from 150 to 350 ppb, more preferably from 150 to 300 ppb, still more preferably from 150 to 250 ppb, even more preferably from 180 to 250 ppb, particularly preferably from 200 to 250 ppb, particularly more preferably from 213 to 241 ppb or from 210 to 230 ppb and particularly still more preferably from 213 to 222 ppb; and
adjusting an alcohol concentration to 4 v/v% or less, preferably from 1 to 4 v/v%, more preferably from 2 to 4 v/v% and still more preferably from 3.0 to 4.0 v/v%, wherein
the highly hydrophobic aroma component comprises a terpene-based compound and an ester-based compound, the terpene-based compound comprises at least one selected from the group consisting of linalool and myrcene, the ester-based compound comprises ethyl octanoate, and
a ratio of the terpene-based compound to the ester-based compound is from 0.04 to 0.2, preferably from more than 0.04 to 0.1 or less, more preferably from 0.042 to 0.088 and still more preferably from 0.043 to 0.08.

[Embodiment 11] A method for prolonging a duration of a good flavor of a low-alcohol beer-like beverage, the method comprising:

containing a fermented wort liquid;
containing a highly hydrophobic aroma component having a LogP of from 3.0 to 4.3, preferably from 3.0 to 3.8, at a concentration of from 150 to 400 ppb, preferably from 150 to 350 ppb, more preferably from 150 to 300 ppb, still more preferably from 150 to 250 ppb, even more preferably from 180 to 250 ppb, particularly preferably from 200 to 250 ppb, particularly more preferably from 213 to 241 ppb or from 210 to 230 ppb and particularly still more preferably from 213 to 222 ppb; and
adjusting an alcohol concentration to 4 v/v% or less, preferably from 1 to 4 v/v%, more preferably from 2 to 4 v/v% and still more preferably from 3.0 to 4.0 v/v%, wherein
the highly hydrophobic aroma component comprises a terpene-based compound and an ester-based compound, the terpene-based compound comprises at least one selected from the group consisting of linalool and myrcene, the ester-based compound comprises ethyl octanoate, and

a ratio of the terpene-based compound to the ester-based compound is from 0.04 to 0.2, preferably from more than 0.04 to 0.1 or less, more preferably from 0.042 to 0.088 and still more preferably from 0.043 to 0.08.

[Embodiment 12] The method according to Embodiment 10 or 11, wherein the adjusting the alcohol concentration to 4 v/v% or less is performed by diluting the fermented wort liquid with water.

[Embodiment 13] A low-alcohol beer-like beverage comprising a fermented wort liquid, the low-alcohol beer-like beverage comprising a highly hydrophobic aroma component having a LogP of from 3.0 to 4.3, preferably from 3.0 to 3.8, at a concentration of from 150 to 400 ppb, preferably from 150 to 350 ppb, more preferably from 180 to 350 ppb, still more preferably from 200 to 300 ppb, particularly preferably from 213 to 241 ppb or preferably from 150 to 250 ppb, and the low-alcohol beer-like beverage having an alcohol concentration of 4 v/v% or less, preferably from 1 to 4 v/v%, more preferably from 2 to 4 v/v% and still more preferably from 3.0 to 4.0 v/v%, wherein

the highly hydrophobic aroma component comprises a terpene-based compound and an ester-based compound, the terpene-based compound comprises at least one selected from the group consisting of linalool and myrcene, the ester-based compound comprises ethyl octanoate, and a ratio of the terpene-based compound to the ester-based compound is from more than 0.0005 to 0.15 or less, preferably from 0.0006 to 0.06 and more preferably from 0.0007 to 0.05.

[Embodiment 14] The low-alcohol beer-like beverage according to Embodiment 13, wherein a ratio of the linalool to the ethyl octanoate is from more than 0.01 to 0.15 or less, preferably from 0.015 to 0.06, more preferably from 0.020 to 0.05 and still more preferably from 0.030 to 0.05.

[Embodiment 15] The low-alcohol beer-like beverage according to Embodiment 13 or 14, wherein a ratio of the myrcene to the ethyl octanoate is from more than 0.0005 to 0.05 or less, preferably from 0.0025 to 0.025 and more preferably from 0.0035 to 0.015.

[Embodiment 16] The low-alcohol beer-like beverage according to any one of Embodiments 13 to 15, having invertase activity.

[Embodiment 17] The low-alcohol beer-like beverage according to any one of Embodiments 13 to 16, having a malt use ratio of 50% or more, preferably from 50 to 100%.

[Embodiment 18] The low-alcohol beer-like beverage according to any one of Embodiments 13 to 17, having an available carbohydrate concentration of from 0.5 to 1.5 g/100 ml, preferably from 0.6 to 1.4 g/100 ml and more preferably from 0.7 to 1.2 g/100 ml.

[Embodiment 19] The low-alcohol beer-like beverage according to any one of Embodiments 13 to 18, having a pH of 4.4 or less, preferably from 3.7 to 4.2 and more preferably from 3.9 to 4.2.

[Embodiment 20] The low-alcohol beer-like beverage according to any one of Embodiments 13 to 19, wherein the fermented wort liquid has an apparent attenuation limit of from 90% to 110%, preferably from 95% to 110%.

[Embodiment 21] The low-alcohol beer-like beverage according to any one of Embodiments 13 to 20, comprising a fermented wort liquid diluted with water.

[Embodiment 22] A method for producing a low-alcohol beer-like beverage, the method comprising:

containing a fermented wort liquid;
containing a highly hydrophobic aroma component having a LogP of from 3.0 to 4.3, preferably from 3.0 to 3.8, at a concentration of from 150 to 400 ppb, preferably from 150 to 350 ppb, more preferably from 180 to 350 ppb, still more preferably from 200 to 300 ppb, particularly preferably from 213 to 241 ppb or preferably from 150 to 250 ppb; and adjusting an alcohol concentration to 4 v/v% or less, preferably from 1 to 4 v/v%, more preferably from 2 to 4 v/v% and still more preferably from 3.0 to 4.0 v/v%, wherein
the highly hydrophobic aroma component comprises a terpene-based compound and an ester-based compound, the terpene-based compound comprises at least one selected from the group consisting of linalool and myrcene, the ester-based compound comprises ethyl octanoate, and a ratio of the terpene-based compound to the ester-based compound is from more than 0.0005 to 0.15 or less, preferably from 0.0006 to 0.06 and more preferably from 0.0007 to 0.05.

[Embodiment 23] A method for prolonging a duration of a good flavor of a low-alcohol beer-like beverage, the method comprising:

containing a fermented wort liquid;
containing a highly hydrophobic aroma component having a LogP of from 3.0 to 4.3, preferably from 3.0 to 3.8, at a concentration of from 150 to 400 ppb, preferably from 150 to 350 ppb, more preferably from 180 to 350 ppb, still more preferably from 200 to 300 ppb, particularly preferably from 213 to 241 ppb or preferably from 150 to 250 ppb; and

adjusting an alcohol concentration to 4 v/v% or less, preferably from 1 to 4 v/v%, more preferably from 2 to 4 v/v% and still more preferably from 3.0 to 4.0 v/v%, wherein
the highly hydrophobic aroma component comprises a terpene-based compound and an ester-based compound, the terpene-based compound comprises at least one selected from the group consisting of linalool and myrcene, the ester-based compound comprises ethyl octanoate, and
a ratio of the terpene-based compound to the ester-based compound is from more than 0.0005 to 0.15 or less, preferably from 0.0006 to 0.06 and more preferably from 0.0007 to 0.05.

[Embodiment 24] The method according to Embodiment 22 or 23, wherein the adjusting the alcohol concentration to 4 v/v% or less is performed by diluting the fermented wort liquid.

EFFECTS OF THE INVENTION

According to the present invention, a low-alcohol beer-like beverage having a long duration of a good flavor is provided.

DETAILED DESCRIPTION

Herein, a term "step" includes not only an independent step but also a step that is not able to be clearly distinguished from any other step/steps as long as an intended purpose of the step is achieved. In addition, a content of each component in a composition means, when a plurality of substances corresponding to each component are present in the composition, a total amount of the plurality of substances present in the composition unless otherwise specified. Furthermore, regarding an upper limit and a lower limit of a numerical range herein, the numerical values may be freely selected and combined. Hereinafter, embodiments of the present invention will be described in detail. However, the embodiments shown below exemplify a low-alcohol beer-like beverage and a method for producing the same for embodying a technical idea of the present invention, and the present invention is not limited to the low-alcohol beer-like beverage and the method for producing the same shown below.

<Low-alcohol beer-like beverage>

A "low-alcohol beer-like beverage" refers to a beer-like beverage having an alcohol concentration lower than that of a regular beer-like beverage. "Beer-like" refers to a taste and an aroma evoking beer.
Herein, the low-alcohol beer-like beverage has an alcohol concentration of 4 v/v% or less, preferably from 1 to 4 v/v%, more preferably from 2 to 4 v/v% and still more preferably from 3.0 to 4.0 v/v%. In addition, the term "alcohol" means ethanol.

<Fermented wort liquid>

The low-alcohol beer-like beverage of the present invention contains a fermented wort liquid. When the low-alcohol beer-like beverage contains a fermented wort liquid, a complicated taste, a drink fulfillment feeling and a body feeling like beer are imparted to the low-alcohol beer-like beverage. The fermented wort liquid is a liquid obtained by fermenting wort with beer yeast. The wort as used in the present invention means wort which can be used in production of regular beer, and includes malt, and hops as necessary.
The fermented wort liquid may be produced by, for example, the following method. First, a crushed malt, an adjunct(s) such as barley, and warm water are added to a charging tank and mixed to prepare a mash (or maische). The mash may be prepared by a conventional method. For example, raw materials are first held at from 35 to 60°C for from 20 to 90 minutes to decompose proteins derived from the raw materials into amino acids, etc., and the process proceeds to a saccharification step. At that time, in addition to the main raw material and the adjunct(s), an enzyme such as transglucosidase, and flavor components such as spices and herbs, and the like are added as necessary.
Thereafter, by gradually raising a temperature of the mash and holding the mash at a predetermined temperature for a certain period of time, a starchy substance is saccharified with the use of an enzyme derived from malt or an enzyme added to the mash. The temperature and time for the saccharification process may be appropriately determined in consideration of a type of enzyme to be used, an amount of the mash and quality of an intended fermented wort liquid, and the saccharification process may be performed by, for example, holding the mash at from 60 to 72°C for from 30 to 90 minutes. After the saccharification process, the mash is held at from 76 to 78°C for about 10 minutes, and then filtered in a wort filtration tank to obtain a transparent saccharified liquid. In addition, when the saccharification process is performed, an enzyme may be added in an appropriate amount within a necessary range.
A raw material to be subjected to saccharification, that is, a starchy raw material contains malt. A content of malt in the raw material to be subjected to saccharification (a malt use ratio) is 50% or more, preferably 60% or more and more preferably 70% or more from the viewpoint of not reducing a flavor like beer. The raw material to be subjected to saccharification may have a malt use ratio of 100%. The malt use ratio is a proportion (% by weight) of malt to all raw materials except water and hops. The higher the malt use ratio, the stronger umami and richness derived from malt of a resulting beer-taste beverage. In addition, the higher the malt use ratio, the higher a content of nitrogen compounds in resulting wort, and when the wort is subjected to fermentation, poor fermentation is less likely to occur, and an unpleasant odor is less likely to occur in the beer-taste beverage.

The adjunct(s) means a raw material other than malt and hops. Examples of the adjunct(s) include starchy raw materials such as barley, wheat, corn starch, corn grits, rice and kaoliang, and available carbohydrate raw materials such as liquid sugar and sugar. Here, the liquid sugar is one produced by decomposing and saccharifying a starchy substance with an acid or a saccharifying enzyme, and mainly contains glucose, maltose and maltotriose, or the like. In addition, spices, herbs and fruits used for a purpose of imparting or improving flavor are also included in the adjunct(s).

The saccharifying enzyme means an enzyme that decomposes a starchy substance to produce sugar(s). Examples of the saccharifying enzyme include α-amylase, glucoamylase and pullulanase.

Wort boiling operation may be performed according to a method and conditions that are usually applied to the beer production. For example, the saccharified liquid whose pH has been adjusted is transferred to a boiling pot and boiled. Hops are added between a start of boiling of the saccharified liquid and whirlpool rest. As the hops, a hop extract or a component extracted from hops may be used. The saccharified liquid is then transferred to a precipitation tank called a whirlpool, and after spent hops generated by boiling and coagulated proteins are removed, the saccharified liquid is cooled to an appropriate temperature by a plate cooler.

By operation up to the wort boiling described above, wort is obtained. The obtained wort is fermented with yeast to produce a fermented wort liquid. Fermentation of the wort may be performed by a conventional method. For example, beer yeast may be inoculated into cooled wort, and the mixture may be transferred to a fermentation tank to perform alcohol fermentation.

An apparent attenuation limit of the fermented wort liquid is adjusted to 90% or more, preferably from 95% to 110% and more preferably from 100% to 110% from the viewpoint of not reducing a flavor like beer. On the other hand, when the apparent attenuation limit is too low, an odor of gunpowder, an odor of chemicals and sticky feeling after drinking associated with reduction in alcohol concentration may occur.

A degree of attenuation (fermentation) is an important index indicating how fermentation progresses, that is, to what extent fermentation has progressed in beer after fermentation. Further, an attenuation limit means a proportion of an extract that is able to be assimilated by beer yeast to an original extract. Here, the extract that is able to be assimilated by beer yeast is obtained by subtracting an extract contained in a product beer (that is, an extract remaining after fermentation of all extracts available to beer yeast (referred to as a final extract)) from an original extract. The apparent attenuation limit refers to an attenuation limit calculated by using as a value of the final extract, an apparent extract, that is, an extract concentration (w/w%) obtained from a specific gravity of the beer as it contains alcohol.

Incidentally, the "extract" refers to a solid content as a residue after vaporization of wort. The extract mainly consists of saccharides (or sugars). A content of the extract may be adjusted by changing charged amounts of malt, various starches and saccharides as raw materials. A concentration of a real extract in the beer-like beverage may be measured by, for example, EBC method (Brewers Association of Japan ed.: Methods of Analysis of BCOJ, 7.2 (2004)). The term "extract" means a nonvolatile solid content itself, an amount of a nonvolatile solid content or a concentration (w/w%) of a nonvolatile solid content, depending on a context.

The apparent attenuation limit Vend of the fermented wort liquid may be determined by, for example, the following formula (1).

$$\text{Vend (\%)} = \{(P - Eend)/P\} \times 100 \quad (1)$$

wherein P is an original extract and Eend is an apparent final extract.

The original extract P is obtained by inversely calculating a value of an extract theoretically before alcohol fermentation from an alcohol concentration and a value of an extract in a product beer according to a Balling formula. Specifically, the original extract P may be obtained by a method shown in Analytica-EBC (9.4) (2007). In addition, the apparent final extract Eend may be obtained by transferring beer into a flask, adding an excess amount of fresh compressed yeast to the flask, fermenting the mixture while stirring the mixture at 25°C until a value of the extract no longer decreases (24 hours), and measuring a value of an apparent extract in remaining beer.

The apparent final extract Eend may exhibit a negative value as it is calculated from specific gravity of a final extract containing alcohol. As a result, the apparent attenuation limit may exceed 100%.

The apparent attenuation limit of the fermented wort liquid may be controlled by, for example, adjusting presence or absence of use of an enzyme when saccharifying the raw material, and saccharification conditions such as a type and a blending amount of the raw material. For example, when saccharification time of the raw material is lengthened, a fermentable saccharide concentration used by yeast may be increased, and the apparent attenuation limit of the fermented wort liquid may be increased.

The fermented wort liquid may be a top fermented wort liquid or a bottom fermented wort liquid, and is preferably a bottom fermented wort liquid from the viewpoint of clean finish of taste. The top fermented wort liquid refers to a fermented wort liquid obtained by inoculating wort with a top fermentation yeast and fermenting the wort under normal fermentation conditions, for example, at from 15 to 25°C for several days. The bottom fermented wort liquid refers to a fermented wort liquid obtained by inoculating wort with a bottom fermentation yeast and fermenting the wort under normal fermentation conditions, for example, at around 10°C for about 1 week.

An amount and concentration of the fermented wort liquid contained in the low-alcohol beer-like beverage may be appropriately adjusted so as to provide a desired alcohol concentration or beer-like flavor.

<Highly hydrophobic aroma component>

The low-alcohol beer-like beverage of the present invention contains a highly hydrophobic aroma component. As a result, a sense of an oxidized odor and an aged taste, which are generated when a low-alcohol beer-like beverage is stored, is reduced. Herein, "reducing a sense" refers to making it difficult to feel a sense of smell and taste by human. Meaning of the term "reducing a sense" includes masking, in other words, enveloping an original aroma of an object by adding an aroma different from the original aroma to the object.

A level of hydrophobicity of an aroma component may be specified based on an octanol/water partition coefficient (LogP). Herein, the highly hydrophobic aroma component refers to an aroma component having a LogP of 3.0 or more. When the LogP of the highly hydrophobic aroma component is less than 3.0, a necessary amount for reducing a sense of an oxidized odor and an aged taste increases, and a flavor like beer of the low-alcohol beer-like beverage may be impaired. When the LogP of the highly hydrophobic aroma component is too high, volatility of an aroma from a water system increases, its scent becomes prominent, and an aroma balance is deteriorated. The LogP of the highly hydrophobic aroma component is preferably from 3.0 to 4.3 and more preferably from 3.0 to 3.8. Specific examples of the highly hydrophobic aroma component are shown in Table 1.

[Table 1]

| Name of substance | LogP |
| --- | --- |
| Myrcene | 4.3 |
| β-ionone | 4.0 |
| Linalool | 3.0 |
| Citronellol | 3.9 |
| Geraniol | 3.6 |
| Ethyl octanoate | 3.8 |

The highly hydrophobic aroma component is contained in the low-alcohol beer-like beverage in such an amount that a concentration of the highly hydrophobic aroma component in the low-alcohol beer-like beverage is from 150 to 400 ppb. When the concentration of the highly hydrophobic aroma component in the low-alcohol beer-like beverage is less than 150 ppb, an oxidized odor and an aged taste are easily felt when they are generated in the low-alcohol beer-like beverage. When the concentration of the highly hydrophobic aroma component exceeds 400 ppb, a flavor balance is deteriorated, and a flavor like beer of the low-alcohol beer-like beverage may be impaired. The concentration of the highly hydrophobic aroma component in the low-alcohol beer-like beverage is preferably from 150 to 250 ppb, more preferably from 180 to 350 ppb and still more preferably from 200 to 300 ppb. In one embodiment, the concentration of the highly hydrophobic aroma component in the low-alcohol beer-like beverage may be preferably from 150 to 350 ppb, more preferably from 150 to 300 ppb, still more preferably from 150 to 250 ppb, even more preferably from 180 to 250 ppb, particularly preferably from 200 to 250 ppb, particularly more preferably from 213 to 241 ppb or from 210 to 230ppb and particularly still more preferably from 213 to 222 ppb.

The concentration of the highly hydrophobic aroma component may be measured by a headspace GC apparatus using an internal standard substance, or subjected to a GC/MS apparatus, and quantified from relative intensity of specific ions.

The highly hydrophobic aroma component contains a terpene-based compound. The terpene-based compound refers to a compound having an isoprene-based skeleton $(C_5H_8)_n$, wherein n is an integer of 2 or more. The terpene-based compound includes myrcene, β-ionone, linalool, citronellol and geraniol. Among them, preferred terpene-based compounds include linalool and myrcene.

Examples of a raw material containing linalool and myrcene include hops, a hop extract and a hop flavoring. Linalool and myrcene may be any of those isolated or extracted from a natural product, those chemically synthesized by a food chemically acceptable method, those derived from a raw material containing linalool and those derived from a raw material containing a precursor to be converted into linalool in a production step.

The highly hydrophobic aroma component contains an ester-based compound. The ester-based compound refers to a compound having an ester bond-based skeleton R-COO-R', wherein R and R' are alkyl groups. The ester-based compound includes ethyl octanoate. Ethyl octanoate is generally produced by yeast during fermentation, although any of those available as compounds or flavorings may be added separately.

In the highly hydrophobic aroma component, a ratio of a terpene-based compound concentration to an ester-based compound concentration (terpene-based compound concentration/ester-based compound concentration) in terms of the same unit is from more than 0.0005 to 0.15 or less, preferably from 0.0006 to 0.06 and more preferably from 0.0007 to 0.05. A unit of the terpene-based compound concentration in this ratio is "ppb". In addition, a unit of the ester-based compound concentration in this ratio is "ppb". By adjusting a range of the ratio in this way, even when an oxidized odor and an aged taste are generated in the low-alcohol beer-like beverage, it is difficult to feel the oxidized odor and the aged taste, and the flavor balance of the low-alcohol beer-like beverage is maintained well. As a result, a duration of a good flavor of the low-alcohol beer-like beverage is prolonged.

In one embodiment, in the highly hydrophobic aroma component, a ratio of a terpene-based compound concentration to an ester-based compound concentration (terpene-based compound concentration/ester-based compound concentration) in terms of the same unit is from 0.04 to 0.2, preferably from more than 0.04 to 0.1 or less, more preferably from 0.042 to 0.088 and still more preferably from 0.043 to 0.08. A unit of the terpene-based compound concentration in this ratio is "ppb". In addition, a unit of the ester-based compound concentration in this ratio is "ppb". By adjusting a range of the ratio in this way, even when an oxidized odor and an aged taste are generated in the low-alcohol beer-like beverage, it is difficult to feel the oxidized odor and the aged taste, and the flavor balance of the low-alcohol beer-like beverage is maintained well. As a result, a duration of a good flavor of the low-alcohol beer-like beverage is prolonged.

In the highly hydrophobic aroma component, a ratio of a linalool concentration to an ethyl octanoate concentration (linalool concentration/ethyl octanoate concentration) is more preferably from more than 0.01 to 0.15 or less, still more preferably from 0.015 to 0.06 and particularly preferably from 0.020 to 0.05. In addition, in the highly hydrophobic aroma component, a ratio of a myrcene concentration to an ethyl octanoate concentration (myrcene concentration/ethyl octanoate concentration) is more preferably from more than 0.0005 to 0.05 or less, still more preferably from 0.0025 to 0.025 and particularly preferably from 0.0035 to 0.015.

In one embodiment, in the highly hydrophobic aroma component, a ratio of a linalool concentration to an ethyl octanoate concentration (linalool concentration/ethyl octanoate concentration) is preferably from more than 0.012 to 0.15 or less, more preferably from 0.015 to 0.06, still more preferably from 0.020 to 0.05 and particularly preferably from 0.025 to 0.05. In addition, in the highly hydrophobic aroma component, a ratio of a myrcene concentration to an ethyl octanoate concentration (myrcene concentration/ethyl octanoate concentration) is preferably from more than 0.027 to 0.077 or less, more preferably from 0.03 to 0.06, still more preferably from more than 0.03 to 0.06 or less, even more preferably from 0.031 to 0.05 and particularly preferably from 0.031 to 0.042.

<Available carbohydrate concentration>

The low-alcohol beer-like beverage of the present invention contains available carbohydrates. Available carbohydrates (or digestible carbohydrates) refer to carbohydrates excluding dietary fiber. The low-alcohol beer-like beverage of the present invention preferably has an available carbohydrate concentration (a concentration of available carbohydrates) of from 0.5 to 1.5 g/100 ml. When the available carbohydrate concentration of the low-alcohol beer-like beverage is less than 0.5 g/100 ml, richness is insufficient, and a taste becomes bland. When the available carbohydrate concentration of the low-alcohol beer-like beverage exceeds 1.5 g/100 ml, sweetness is strongly felt, and a taste also becomes heavy. The available carbohydrate concentration of the low-alcohol beer-like beverage is preferably from 0.6 to 1.4 g/100 ml and more preferably from 0.7 to 1.2 g/100 ml.

The available carbohydrate concentration of the low-alcohol beer-like beverage may be measured in accordance with a method described in Notification No. 139 by Vice-Commissioner of the Consumer Affairs Agency, Government of Japan dated March 30, 2015.

<Original extract concentration>

The low-alcohol beer-like beverage of the present invention preferably has an original extract concentration of less than 12.2% by mass. As a result, there is an advantage that low alcohol is realized and a beer beverage having a light taste is obtained. The original extract concentration of the low-alcohol beer-like beverage of the present invention is more preferably from 5 to 10% by mass and still more preferably from 6 to 8% by mass.

The original extract concentration of the beer-taste beverage according to the present invention may be determined by, for example, measuring ethanol by 8.3.6. Alcolyzer Method and measuring real extract by 8.4.3. Alcolyzer Method, and calculating the original extract concentration by 8.5 Calculation Method relating to Extract in Methods of Analysis of BCOJ (Revised Edition) (published by Brewing Society of Japan, edited by Brewery Convention of Japan [Analysis Committee], Brewers Association of Japan, revised and enlarged in 2013).

<pH>

The low-alcohol beer-like beverage of the present invention preferably has a pH of 4.2 or less. As a result, durability of the low-alcohol beer-like beverage against microorganisms is improved. On the other hand, when the pH is too low, sourness of a resulting low-alcohol beer-like beverage is strong, a balance between sourness and sweetness is deteriorated, and palatability is lowered. The pH of the low-alcohol beer-like beverage of the present invention is more preferably from 3.7 to 4.2 and still more preferably from 3.9 to 4.2. Here, the pH of the beer-taste beverage is a pH as a final product.

The pH of the low-alcohol beer-like beverage may be adjusted by containing a pH adjusting agent at any time point in a production step. The pH adjusting agent may be, for example, at least one selected from the group consisting of phosphoric acid, citric acid, malic acid, succinic acid, lactic acid and acetic acid. Among them, a preferred pH adjusting agent is phosphoric acid or lactic acid.

<Carbon dioxide gas pressure>

The low-alcohol beer-like beverage of the present invention contains a carbon dioxide gas. A carbon dioxide gas pressure of the low-alcohol beer-like beverage of the present invention is 0.23 MPa or more. As a result, durability of the low-alcohol beer-like beverage against microorganisms is improved. On the other hand, when the carbon dioxide gas pressure is too high, a flavor of the low-alcohol beer-like beverage is light, a body feeling is lowered, and drink fulfillment is poor. The carbon dioxide gas pressure of the low-alcohol beer-like beverage of the present invention is preferably from 0.23 to 0.30 MPa and more preferably from 0.24 to 0.26 MPa.

<Method for producing low-alcohol beer-like beverage>

A method for producing a low-alcohol beer-like beverage of the present invention includes containing a fermented wort liquid in a low-alcohol beer-like beverage. In this case, a fermented wort liquid may be used as a base liquid of a low-alcohol beer-like beverage.

The method for producing a low-alcohol beer-like beverage of the present invention includes containing a highly hydrophobic aroma component having a LogP of from 3.0 to 4.3 at a concentration of from 150 to 400 ppb in a low-alcohol beer-like beverage. The concentration of the highly hydrophobic aroma component in the low-alcohol beer-like beverage may be adjusted using a method for adding a highly hydrophobic aroma component itself as an additive or a method for adding a flavoring containing a highly hydrophobic aroma component as an additive.

Some of the highly hydrophobic aroma components are introduced into a fermented wort liquid from a raw material. Therefore, the concentration of the highly hydrophobic aroma component of the low-alcohol beer-like beverage may also be adjusted by adjusting an amount of a raw material containing a highly hydrophobic aroma component used. Specific examples of the raw material containing a highly hydrophobic aroma component include hops.

In the method for producing a low-alcohol beer-like beverage, the concentration of the highly hydrophobic aroma component may be adjusted by, for example, any step such as a cooling step after wort boiling, a fermentation step, an aging step or filtration. In this case, it is conceivable that the earlier a step of adding a flavoring is, the more a concentration of a component in the flavoring decreases, and thus it is desirable to perform the step after completion of a secondary fermentation (conditioning) step.

The method for producing a low-alcohol beer-like beverage of the present invention includes adjusting an alcohol concentration of the low-alcohol beer-like beverage to 4 v/v% or less. The alcohol concentration of the low-alcohol beer-like beverage may be adjusted by, for example, diluting a liquid to be treated such as wort. The dilution may be performed by, for example, adding water to the liquid to be treated.

In the method for producing a low-alcohol beer-like beverage, the dilution of the liquid to be treated may be performed by, for example, any step such as a cooling step after wort boiling, a fermentation step, an aging step or filtration.

In addition, the method for producing a low-alcohol beer-like beverage of the present invention may include adjusting an available carbohydrate concentration of the low-alcohol beer-like beverage to from 0.5 to 1.5 g/100 ml.

The available carbohydrate concentration of the beer-like beverage may be adjusted by, for example, a method in which an external enzyme is added or an action of an enzyme contained in grain is activated during a saccharification step to decompose a carbon source extracted from a grain raw material such as malt into saccharide(s) that is able to be assimilated by yeast and the saccharide(s) is assimilated by yeast during fermentation to reduce an available carbohydrate; a method in which liquid sugar containing a large amount of an available carbohydrate that is able to be assimilated by yeast is used to increase assimilability by yeast to reduce the available carbohydrate; or a method in which a concentration of an available carbohydrate is reduced by dilution.

The method for producing a low-alcohol beer-like beverage may further include a step of adding a caramel coloring or the like, a boiling step, a pH adjusting step, a filtration step, a flavor adjusting step and a step of dissolving a carbon dioxide gas, using a known apparatus.

The method for producing a low-alcohol beer-like beverage may further include a step of adding a dietary fiber, a soybean peptide, carbon dioxide, an extract, a flavoring, an acidulant, a sweetener, a bittering agent, a colorant, an antioxidant, a pH adjusting agent and various nutrient components, as necessary.

The low-alcohol beer-like beverage of the present invention is preferably a beverage produced without undergoing heat treatment after the fermentation step (non-heated fermented beverage). As a result, volatilization and thermal degradation of the highly hydrophobic aroma component is prevented, and a function of suppressing an oxidized odor and an aged taste is enhanced.

When heat treatment is not performed after the fermentation step, even when yeast is removed by solid-liquid separation treatment, some of various enzymes derived from yeast are contained while maintaining activity. Therefore, invertase activity and protease activity are detected in the non-heated fermented beverage. That is, as the low-alcohol beer-like beverage of the present invention, a low-alcohol beer-like beverage having invertase activity and protease activity is preferable.

In one embodiment, the low-alcohol beer-like beverage of the present invention has an invertase activity of 50 U or more, preferably from 100 to 1500 U and more preferably from 300 to 1000 U. The invertase activity and the protease activity may be measured by a conventional method.

EXAMPLES

The present invention will be described more specifically with reference to the following Examples, but the present invention is not limited thereto.

<Method for measuring concentration of highly hydrophobic aroma component>

A concentration of a highly hydrophobic aroma component was measured by a stir bar sorptive extraction method (SBSE method). That is, β-damascone as an internal standard was added at 0.1 ppb to a sample to be measured. The sample was diluted 5 times and 20 ml of the diluted sample was taken into a 30 ml vial. A stir bar coated with 47 μl of polydimethylsiloxane (PDMS) (length = 20 mm; Twister (trade name); manufactured by GERSTEL GmbH & Co. KG, Germany) was placed in the vial, the vial was capped and its content was stirred at 40°C for 2 hours to allow the stir bar to adsorb a hop aroma component. The stir bar was taken out of the vial and, after complete removal of water droplets, inserted into a GC-MS equipped with a thermal desorption unit (TDU) (manufactured by GERSTEL GmbH & Co. KG) and a programmable temperature-vaporization inlet (CIS4) (manufactured by GERSTEL GmbH & Co. KG).

[Table 2]

| <GC-MS conditions> | |
| --- | --- |
| Apparatus | "Agilent 6890" (trade name) gas chromatograph manufactured by Agilent Technologies, Inc. |
| Detector | "Agilent 5973N" (trade name) quadrupole mass spectrometer manufactured by Agilent Technologies, Inc. |
| Column | DB-WAX capillary column (length: 60 m, inner diameter: 0.25 mm, film thickness: 0.25 μm, manufactured by Agilent Technologies, Inc.) |
| Injection port | 250°C, pulsed splitless injection mode |
| Injection volume | 1 μL |
| Carrier gas | Helium (1 ml/min) |
| Setting of column temperature | 40°C (held for 5 minutes) - (3°C/min) - 240°C (20 minutes) |
| Mass-to-charge ratio | 30 to 350 (m/z) |

(continued)

| Ionization conditions | 70 eV, single ion-monitoring (SIM) mode |
|---|---|
| Quantification | Performed by comparing the peak area of each aroma component with the peak area of the internal standard. |

<Method for measuring invertase activity>

Invertase activity was measured using F-Kit D-Glucose manufactured by J. K. International Inc. The sample was mixed with solution I and pure water and allowed to stand, and then absorbance (E1) at 340 nm was measured. Thereafter, solution II was added and mixed, the mixture was allowed to stand, and then absorbance (E2) was measured.

Based on a value of D-glucose (g/L) determined by formula

$$(E2 - E1) \times 0.8641 \qquad (2),$$

invertase activity (U) was measured, where an amount of enzyme in 1 L of beer producing 1 μmol of glucose from sucrose per minute was 1 U.

<Example 1>

A beer-like beverage was produced using a 200 L scale charging facility. First, 37 kg of malt and 15 kg of adjuncts were mixed with the use of rice and corn starch as the adjuncts to prepare a starchy raw material having a malt use ratio of 70% by weight. Subsequently, 200 L of warm water was added to the starchy raw material, and heating was performed to saccharify the starchy raw material at a temperature in a range of from 64°C to 76°C. The obtained saccharified liquid was filtered, 20 g of Hercules hops were added before boiling, and the mixture was boiled in a boiling pot to obtain wort. After boiling, the wort was transferred to a precipitation tank (called whirlpool) to remove precipitates such as spent hops. After removal of the precipitates, the wort was cooled to 6°C by a heat exchanger (plate cooler). After cooling, the wort was inoculated with yeast to ferment under conditions of 200 kPa and 10°C, and filtration was performed to obtain a fermented wort liquid. The apparent attenuation limit of the fermented wort liquid was 104%.

The available carbohydrate concentration of the fermented wort liquid was adjusted to 0.9 g/100 ml by adjusting the water content, and the alcohol concentration was adjusted to 3.5 v/v%.

The concentration of the highly hydrophobic aroma component, the ethyl acetate concentration and the isoamyl acetate concentration of the beer-like beverage thus obtained were measured. The results are shown in Table 3.

[Table 3]

| Name of substance | LogP | Concentration (ppb) |
|---|---|---|
| Linalool | 3.0 | 2.4 |
| Myrcene | 4.3 | 5.4 |
| Citronellol | 3.9 | 2.4 |
| Geraniol | 3.6 | 2.3 |
| Ethyl octanoate | 3.8 | 200 |
| Ethyl acetate | 0.7 | 11 |
| Isoamyl acetate | 2.3 | 33 |

The concentration of an original extract in the obtained beer-like beverage was 7.0% by mass. In addition, invertase activity of the obtained beer-like beverage was measured and found to be 526 (U). In this example, since heat treatment was not performed after the fermentation step of the fermented wort liquid, and invertase activity was detected.

Linalool was prepared as a highly hydrophobic aroma component. The beer-like beverage was divided into seven samples, linalool was not added to one sample for use as a control, and linalool was added to the remaining six samples to adjust the concentration of the highly hydrophobic aroma component as shown in Table 4.

The samples were stored as one group at 37°C in a dark place for 7 days.

The concentration of trans-2-nonenal (hereinafter referred to as "E2N") of the beer-like beverage was measured in the same manner as described above for the highly hydrophobic aroma component. The results are shown in Table 4.

Incidentally, E2N is a substance in which a characteristic cardboard odor, unpreferable sweetness and a powdery taste are recognized as indices of oxidative degradation of a beer-like beverage (Japanese Patent Laid-open Publication No. 2019-080579).

The temperature of each sample was adjusted to a liquid temperature of about 4°C, and sensory evaluation was performed by 10 panelists specialized in beer. As evaluation items, (1) intensity of oxidized odor and (2) intensity of aged taste were set.

As the evaluation items, the sensory intensity was scored in a five-grade evaluation. Scoring criteria were set as follows. The average value of the values scored by respective panelists and the comments are shown in Table 4.

<Scoring criteria>

The sensory intensity of the control sample stored at 0°C in a dark place for 7 days is taken as 1 point.

The sensory intensity of the control sample stored at 37°C for 30 days is taken as 5 points.

[Table 4]

| | Control | Tests | | | | | |
|---|---|---|---|---|---|---|---|
| | | 1 | 2 | 3 | 4 | 5 | 6 |
| Linalool (ppb) | 2.4 | 3 | 5 | 7 | 10 | 12 | 30 |
| Ethyl octanoate (ppb) | 200 | 200 | 200 | 200 | 200 | 200 | 200 |
| Linalool/ethy l octanoate | 0.012 | 0.015 | 0.025 | 0.035 | 0.05 | 0.06 | 0.15 |
| Concentratio n of highly hydrophobic aroma component (ppb) | 212.5 | 213.1 | 215.1 | 217.1 | 220.1 | 222.1 | 240.1 |
| Terpene-based compound/ ester-based compound | 0.039 | 0.042 | 0.052 | 0.062 | 0.077 | 0.087 | 0.177 |
| E2N (ppb) | 0.07 | 0.07 | 0.07 | 0.07 | 0.07 | 0.07 | 0.07 |
| Oxidized odor | 3.6 | 2.7 | 3.1 | 2.7 | 1.8 | 1.9 | 2.1 |
| Aged taste | 4.0 | 3.0 | 2.7 | 2.5 | 2.3 | 2.0 | 2.5 |
| Comments | Strong cardboard , strong aged smell | Pickle-like | Slightly strong cardboard | Cardboar d | Floral, fruit | Floral | Muscat, perfumer y, and floral remainin g strongly |

<Example 2>

A beer-like beverage was produced in the same manner as in Example 1 and used as a control sample.

Myrcene was prepared as a highly hydrophobic aroma component. Samples in which the concentration of the highly hydrophobic aroma component was adjusted were produced and subjected to the storage test, in the same manner as in Example 1 except that myrcene was used instead of linalool. After the storage, the E2N concentration of the samples was measured, and the sensory test was performed. The results are shown in Table 5.

[Table 5]

| | Control | Tests | | | | | |
|---|---|---|---|---|---|---|---|
| | | 1 | 2 | 3 | 4 | 5 | 6 |
| Myrcene (ppb) | 5.4 | 5.9 | 6.1 | 6.4 | 8.4 | 10.4 | 15.4 |
| Ethyl octanoate (ppb) | 200 | 200 | 200 | 200 | 200 | 200 | 200 |
| Myrcene/eth yl octanoate | 0.027 | 0.030 | 0.031 | 0.032 | 0.042 | 0.052 | 0.077 |

(continued)

|  | Control | Tests | | | | | |
|---|---|---|---|---|---|---|---|
|  |  | 1 | 2 | 3 | 4 | 5 | 6 |
| Concentrati on of highly hydrophobic aroma component (ppb) | 212.5 | 213 | 213.2 | 213.5 | 215.5 | 217.5 | 222.5 |
| Terpene-based com-pound/ ester-based com-pound | 0.039 | 0.042 | 0.043 | 0.044 | 0.054 | 0.064 | 0.089 |
| E2N (ppb) | 0.07 | 0.07 | 0.07 | 0.07 | 0.07 | 0.07 | 0.07 |
| Oxidized odor | 3.6 | 2.8 | 2.7 | 2.6 | 2.4 | 2.4 | 2.8 |
| Aged taste | 4.0 | 2.5 | 2.6 | 2.4 | 2.8 | 2.3 | 2.5 |
| Comments | Strong cardboard , strong aged smell | Cardboar d, aged smell | Cardboar d, floral, aged smell | Floral, hop | Floral, grassy | Grassy | Strong grassy |

<Comparative Example 1>

A beer-like beverage was produced in the same manner as in Example 1, and this was used as a control sample.

Ethyl acetate (LogP = 0.7) having a hydrophobicity LogP of less than 3 was prepared. Samples in which the concentration of the aroma component was adjusted were produced and subjected to the storage test, in the same manner as in Example 1 except that ethyl acetate was used instead of linalool. After the storage, the E2N concentration of the samples was measured, and the sensory test was performed. The results are shown in Table 6.

[Table 6]

|  | Control | Tests | | | |
|---|---|---|---|---|---|
|  |  | 1 | 2 | 3 | 4 |
| Ethyl acetate (ppb) | 11 | 15 | 20 | 25 | 30 |
| E2N (ppb) | 0.07 | 0.07 | 0.07 | 0.07 | 0.07 |
| Oxidized odor | 3.6 | 4.0 | 4.2 | 3.8 | 3.6 |
| Aged taste | 4.0 | 3.9 | 4.1 | 3.5 | 3.8 |
| Comments | Strong cardboard, strong aged smell | Strong cardboard, strong aged smell | Cardboard, aged smell, fruit | Cardboard, heavy aged smell | Cardboard, solvent |

<Comparative Example 2>

A beer-like beverage was produced in the same manner as in Example 1 and used as a control sample.

Isoamyl acetate (LogP = 2.3) having a hydrophobicity LogP of less than 3 was prepared. Samples in which the concentration of the aroma component was adjusted were produced and subjected to the storage test, in the same manner as in Example 1 except that isoamyl acetate was used instead of linalool. After the storage, the E2N concentration of the samples was measured, and the sensory test was performed. The results are shown in Table 7.

[Table 7]

| | Control | Tests | | | |
|---|---|---|---|---|---|
| | | 1 | 2 | 3 | 4 |
| Isoamyl acetate (ppb) | 33 | 40 | 45 | 50 | 60 |
| E2N (ppb) | 0.07 | 0.07 | 0.07 | 0.07 | 0.07 |
| Oxidized odor | 3.6 | 3.8 | 3.7 | 4.1 | 3.7 |
| Aged taste | 4.0 | 4.1 | 4.2 | 3.6 | 3.7 |
| Comments | Strong cardboard, strong aged smell | Cardboard, aged smell, fruit | Cardboard, aged smell, fruit | Cardboard, aged smell, banana | Cardboard, strong banana aroma |

<Reference Example>

As a beer-like beverage, beer ("Asahi Super DRY" (trade name) manufactured by ASAHI BREWERIES, LTD.) having an alcohol concentration of 5.0 v/v% and an available carbohydrate concentration of 3.0 g/100 ml was prepared. The storage, the E2N concentration measurement and the sensory test were performed in the same manner as in Example 1 except that this beer was used as a sample. The results are shown in Table 8.

[Table 8]

| | |
|---|---|
| E2N (ppb) | 0.06 |
| Available carbohydrate (g/100ml) | 3.0 |
| Invertase activity (U) | 884 |
| Oxidized odor | 2.3 |
| Aged taste | 2.1 |
| Comments | Cardboard, light, sweetness |

**Claims**

1.    A low-alcohol beer-like beverage comprising a fermented wort liquid, the low-alcohol beer-like beverage comprising a highly hydrophobic aroma component having a LogP of from 3.0 to 4.3 at a concentration of from 150 to 400 ppb, and the low-alcohol beer-like beverage having an alcohol concentration of 4 v/v% or less, wherein

the highly hydrophobic aroma component comprises a terpene-based compound and an ester-based compound, the terpene-based compound comprises at least one selected from the group consisting of linalool and myrcene, the ester-based compound comprises ethyl octanoate, and
a ratio of the terpene-based compound to the ester-based compound is from 0.04 to 0.2.

2.    The low-alcohol beer-like beverage according to claim 1, wherein a ratio of the linalool to the ethyl octanoate is from more than 0.012 to 0.15 or less.

3.    The low-alcohol beer-like beverage according to claim 1 or 2, wherein a ratio of the myrcene to the ethyl octanoate is from more than 0.03 to 0.06 or less.

4.    The low-alcohol beer-like beverage according to any one of claims 1 to 3, having invertase activity.

5.    The low-alcohol beer-like beverage according to any one of claims 1 to 4, having a malt use ratio of 50% or more.

6.    The low-alcohol beer-like beverage according to any one of claims 1 to 5, having an available carbohydrate concentration of from 0.5 to 1.5 g/100 ml.

7. The low-alcohol beer-like beverage according to any one of claims 1 to 6, having a pH of 4.4 or less.

8. The low-alcohol beer-like beverage according to any one of claims 1 to 7, wherein the fermented wort liquid has an apparent attenuation limit of from 90 to 110%.

9. The low-alcohol beer-like beverage according to any one of claims 1 to 8, comprising a fermented wort liquid diluted with water.

10. A method for producing a low-alcohol beer-like beverage, the method comprising:

   containing a fermented wort liquid;
   containing a highly hydrophobic aroma component having a LogP of from 3.0 to 4.3 at a concentration of from 150 to 400 ppb; and
   adjusting an alcohol concentration to 4 v/v% or less, wherein
   the highly hydrophobic aroma component comprises a terpene-based compound and an ester-based compound,
   the terpene-based compound comprises at least one selected from the group consisting of linalool and myrcene,
   the ester-based compound comprises ethyl octanoate, and
   a ratio of the terpene-based compound to the ester-based compound is from 0.04 to 0.2.

11. A method for prolonging a duration of a good flavor of a low-alcohol beer-like beverage, the method comprising:

   containing a fermented wort liquid;
   containing a highly hydrophobic aroma component having a LogP of from 3.0 to 4.3 at a concentration of from 150 to 400 ppb; and
   adjusting an alcohol concentration to 4 v/v% or less, wherein
   the highly hydrophobic aroma component comprises a terpene-based compound and an ester-based compound,
   the terpene-based compound comprises at least one selected from the group consisting of linalool and myrcene,
   the ester-based compound comprises ethyl octanoate, and
   a ratio of the terpene-based compound to the ester-based compound is from 0.04 to 0.2.

12. The method according to claim 10 or 11, wherein the adjusting the alcohol concentration to 4 v/v% or less is performed by diluting the fermented wort liquid with water.

## INTERNATIONAL SEARCH REPORT

| International application No. |
|---|
| **PCT/JP2024/020592** |

**A. CLASSIFICATION OF SUBJECT MATTER**

*C12C 12/04*(2006.01)i; *C12C 5/02*(2006.01)i; *C12G 3/04*(2019.01)i; *C12G 3/06*(2006.01)i
FI: C12C12/04; C12G3/04; C12G3/06; C12C5/02

According to International Patent Classification (IPC) or to both national classification and IPC

**B. FIELDS SEARCHED**

Minimum documentation searched (classification system followed by classification symbols)

C12C12/04; C12C5/02; C12G3/04; C12G3/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/MEDLINE/EMBASE/BIOSIS (STN); Science Direct

**C. DOCUMENTS CONSIDERED TO BE RELEVANT**

| Category* | Citation of document, with indication, where appropriate, of the relevant passages | Relevant to claim No. |
|---|---|---|
| A | JP 2015-027309 A (SOMEYA, Taichi) 12 February 2015 (2015-02-12) claims 1, 3-4, 10, example 12, paragraph [0045] | 1-12 |
| A | JP 2019-000124 A (SUNTORY HOLDINGS LTD.) 10 January 2019 (2019-01-10) claim 1 | 1-12 |
| A | JP 2021-136961 A (ASAHI BREWERIES, LTD.) 16 September 2021 (2021-09-16) claim 1 | 1-12 |
| A | JP 2018-198554 A (ASAHI BREWERIES, LTD.) 20 December 2018 (2018-12-20) claim 1 | 1-12 |
| A | JP 2015-123044 A (ASAHI BREWERIES, LTD.) 06 July 2015 (2015-07-06) claim 1 | 1-12 |
| A | JP 2018-011587 A (ASAHI BREWERIES, LTD.) 25 January 2018 (2018-01-25) claim 1 | 1-12 |

☑ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **24 June 2024** | **09 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
|---|
| **PCT/JP2024/020592** |

**C.     DOCUMENTS CONSIDERED TO BE RELEVANT**

| Category* | Citation of document, with indication, where appropriate, of the relevant passages | Relevant to claim No. |
|---|---|---|
| A | JP 2017-118824 A (ASAHI BREWERIES, LTD.) 06 July 2017 (2017-07-06)<br>    claims 3, 7-8 | 1-12 |
| A | JP 2020-195319 A (SUNTORY HOLDINGS LTD.) 10 December 2020 (2020-12-10)<br>    claim 1 | 1-12 |
| A | FRITSCH, Helge T. and SCHIEBERLE, Peter. Identification Based on Quantitative<br>Measurements and Aroma Recombination of the Character Impact Odorants in a Bavarian<br>Pilsner-type Beer. Journal of Agricultural and Food Chemistry. 21 September 2005, vol. 53,<br>issue 19, pp. 7544-7551, DOI: 10.1021/jf051167k<br>    whole document | 1-12 |

Form PCT/ISA/210 (second sheet) (July 2022)

## INTERNATIONAL SEARCH REPORT
### Information on patent family members

International application No.

**PCT/JP2024/020592**

| Patent document cited in search report | | | Publication date (day/month/year) | Patent family member(s) | Publication date (day/month/year) |
|---|---|---|---|---|---|
| JP | 2015-027309 | A | 12 February 2015 | (Family: none) | |
| JP | 2019-000124 | A | 10 January 2019 | (Family: none) | |
| JP | 2021-136961 | A | 16 September 2021 | (Family: none) | |
| JP | 2018-198554 | A | 20 December 2018 | (Family: none) | |
| JP | 2015-123044 | A | 06 July 2015 | (Family: none) | |
| JP | 2018-011587 | A | 25 January 2018 | (Family: none) | |
| JP | 2017-118824 | A | 06 July 2017 | (Family: none) | |
| JP | 2020-195319 | A | 10 December 2020 | (Family: none) | |

Form PCT/ISA/210 (patent family annex) (July 2022)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012239460 A
- JP 2018174756 A
- JP 2022066506 A
- JP 2019080579 A

**Non-patent literature cited in the description**

- Brewing Society of Japan. Brewery Convention of Japan [Analysis Committee, 2013